# EUROPEAN PATENT SPECIFICATION

(11) **EP 2 074 456 B1**
(45) Date of publication and mention of the grant of the patent: **27.03.2013**
(21) Application number: 07824065.2
(22) Date of filing: 08.10.2007
(51) Int. Cl.: G02B 6/44, H02G 1/08

(54) **OPTICAL FIBRE INSTALLATION APPARATUS**
FASEROPTISCHE INSTALLATIONSVORRICHTUNG
APPAREIL D'INSTALLATION DE FIBRE OPTIQUE

(30) Priority: 17.10.2006 EP 06255332
(43) Date of publication of application: 01.07.2009
(73) Proprietor: BRITISH TELECOMMUNICATIONS public limited company, London EC1A 7AJ (GB)
(72) Inventor: TAYLOR, Christopher Charles, Gloucestershire GL52 8SR (GB); BARKER, Philip Alfred, Suffolk IP10 0PP (GB)
(74) Representative: Williamson, Simeon Paul
(86) International application number: PCT/GB2007/003811
(87) International publication number: WO 2008/047076

(56) References cited:
- EP-A1- 0 292 037
- WO-A-95/23988
- WO-A-2006/103419
- FR-A- 2 872 299
- GB-A- 2 388 966
- US-A- 5 813 658
- US-A- 6 129 341
- US-A1- 2002 158 239

## Description

This invention relates to methods and apparatus for the installation of telecommunications cables, in particular optical fibre installed into pre-installed optical fibre tubes by "blowing" techniques.

The method and apparatus used to install optical fibre transmission lines into optical fibre tubes or ducts using the viscous drag provided by a high-speed flow of a fluid medium, often air, is known from EP108590 and other publications. A blowing head is used for the installation of the optical fibre unit into the optical fibre tubes or ducts. (In this description, references to "fibre" and "fibre units" shall be deemed to include individual fibre members, fibre bundles and fibre cables, and vice versa, as the context allows.)

In general, the blowing head comprises a chamber, into which pressurised air is pumped. The air is directed to flow into the mouth of a fibre tube, and then through the tube which is connected to the blowing head. The fibre unit is fed into the tube by a pushing force, typically between a pair of motorised drive rollers or wheels. (A drive wheel typically consists of a disc having a thickness, with a rim being the surface defined by the thickness of the disc. In this description, the term "rim" may refer to all or part of this surface as the context permits.) When a sufficient length of fibre unit has been pushed into the tube, the pressurised air works on the fibre surface allowing the effects of viscous drag to take over at least part of the task of advancing the fibre within the tube.

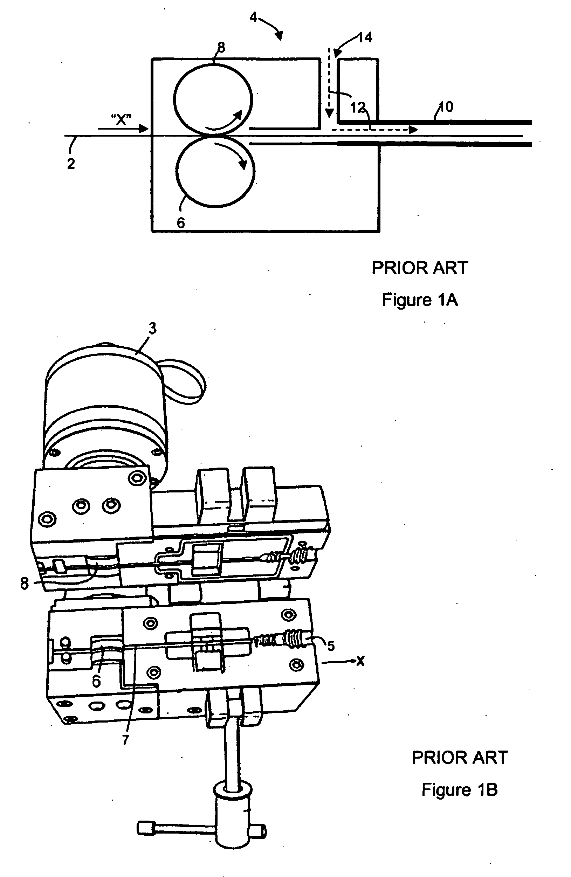

Figure 1A is a schematic view of the main operational parts of a typical blowing head known in the art. A supply of fibre unit (2) is taken from a pan (not shown), fed in the direction indicated by the arrow "X" into a blowing head (4) at a first, entry, end, and travels along a path described by a bore which extends the length of the blowing head. In use, the fibre unit passes through a pair of motorised drive wheels (6, 8) along the blowing head to the opposite, exit, end of the blowing head, to which the fibre tube (10) which the fibre unit is to populate, is coupled. The fibre unit travels along the bore from the entry to exit ends of the blowing head by being driven by the drive wheels, which are powered by a motor (not shown). Within the tube, the progress of the fibre unit through the fibre tube is further assisted by a supply of pressurised air (12) which is fed into the blowing head via an air supply vent, where most of the air enters and flows along in the interior of the fibre tube so as to carry the fibre unit along by viscous drag to obtain the advance of the fibre unit through the tube to the far end.

Figure 1B shows a particular embodiment of a blowing head which was developed and used by the applicants, and described in greater detail in e.g. the patient specification of WO 98/12588. The blowing head is here shown in an open position comprising the upper and lower parts of the device which are pivotally hinged together. During an installation session, the two parts are brought together and secured with a clamp. A throughbore (7) extends along the length of the blowing head, defining the path taken by the fibre unit during an installation session. The fibre unit is fed and driven in the direction of the arrow "X", and passes between the pair of drive wheels (6, 8) which in use engage tightly together with no distance between them. The fibre unit passes through the head along the throughbore and eventually emerges at the other end of the throughbore and into the waiting tube which is secured to the head at the portion of the throughbore (5). Within the blowing head, the drive wheels serve to drive the fibre unit along, and the wheels themselves are powered by a motor (3). In this blowing head, the motor directly powers the upper drive wheel (8). The lower drive wheel (6) is not directly connected to the motor and is driven only when the two parts of the head are assembled so that the two wheels engage in such a manner that the movement of the upper drive wheel causes the lower wheel to rotate.

In yet another embodiment of a blowing head described in the applicant's application under WO 2006103419 (which shall in the present discussion be referred to as the "low-inertia blowing head"), the drive wheels (6, 8) are preferably made from lightweight material such as a plastic compound. Again, they are coupled to the driving power source e.g. an electrical motor, so that in use the wheels rotate about their respective axes impacting onto the fibre unit travelling between the drive wheel rims, the driving force which carries the fibre through the blowing head and into the fibre tube. Unlike the blowing head discussed against Figure 1B however, each drive wheel is arranged so that each one is independently capable of rotation, without engaging the other drive wheel Here, the drive heads are connected via a light gearing located remote to the wheel rims which engage the fibre unit during use. The distance between the drive wheel rims is carefully set so that they either just touch, or else are just shy of touching each other, so that in use the fibre unit can be lightly accommodated in the space between the wheel rims.

This arrangement reduces the inertia levels of the drive wheels in use to a minimal level. In the present discussion, "low inertia" refers to the capacity of components of the system to quickly respond or react to changes - in particular the change in speed or movement of the optical fibre travelling between the drive wheels during use, by e.g. slowing or stopping the rotational movement of the drive wheels.

In use, the drive wheels engage with the exterior surface of the fibre unit relatively lightly, as opposed to the higher compressive force wherein the wheels "crunch" on each other and on the fibre. In the low-inertia system therefore, if the fibre unit being driven by and through the drive wheels slows down in movement or stops - which occurs when the fibre unit buckles - this causes the lightly-mounted drive wheels to also slow down or stop their rotary movement.

Another aspect of the blowing head described in WO 2006103419, is that the electrical current output by the motor is capped. This means that if and when the drive wheels slow down or stop, the current level output by the motor cannot rise above a pre-detennined limit. Where the fibre unit movement slows or stops, this is an indication of either an impending or a realised buckle outside the blowing head e.g. somewhere in the tube which is being populated. The limit of the current is set at a level so that if the fibre unit slows in its movement (indicating an imminent buckle), the drive wheels also slow down to compensate; if the fibre unit movement slows or stops, the motor current approaches or reaches its ceiling level, and the drive wheels either slow down or stop rotating completely.

In use, the blowing heads of the prior art suffer from a number of problems. One such problem is that the fibre unit may buckle during installation. As discussed in EP253636, optical fibre is flexible and necessarily smaller in cross section than the fibre tube it is populating. In use, part of the advancing fibre unit could stop moving within the tube due to excessive friction build up between the fibre and the interior of the tube. A fibre buckle develops if the blowing head continues to drive the fibre unit regardless. A buckled fibre unit could adversely affect the performance of the fibre when installed, or even physically damage it. At the least, buckling would slow down the installation process.

It is thus crucial that the distance between the drive wheel rims in particular is very precisely provided for, and positioned to ensure that the system is sufficiently low-inertia, to allow for any slowing down or stopping in the fibre unit movement to be quickly detected and fed back so that the motor current can respond accordingly. However, delicately-configured instruments are impractical in the field, where they need to be sufficiently robust to withstand a measure of manhandling, physical shock, and contamination.

In the prior art blowing heads discussed herein, there is little or no flexibility associated with the drive wheel distance setting. Thus if installation of a fibre unit outside the small range (if indeed a range is possible) of fibre unit sizes for which the wheels are set is desired, the user will need to change the drive wheel settings. These could include changing the tyres on drive wheels, to modify the distance between the wheels, or to replace the wheels completely e.g. from a plain or flat profile to a grooved profile to accommodate an increase in fibre diameter.

Thus, in the solution, proposed by the applicants in an earlier application no. WO 2006103419, an apparatus arranged to be sensitive to fibre buckles is described, wherein a low-inertia system is capable of detecting an impending buckle, before it occurs. The drive wheels are arranged to be responsive to detection of the impending fibre unit buckle by slowing or stopping so that the pushing force reduces or stops, thus considerably reducing the occurrence of buckles. The responsiveness of the blowing head system is derived from carefully arranging the distance between the drive wheels so that the fibre unit is engaged relatively lightly with, and between, the drive wheels. As optical fibre units and fibre cables are typically very small in diameter (e.g. about 1 mm for a fibre unit), the wheel rim distance is configured so that they only lightly touch each other, or else do not actually touch but are just shy of doing so. By further providing that the current output by the motor driving wheels is capped, the blowing head is set up to sense an impending buckle in the fibre unit manifested as a slowing down or stopping in the progress of the fibre unit through the drive wheels.

Due to the smallness of the diameter of the fibre unit, there is very little tolerance in the system when handling the fibre unit; thus the components of the blowing head must be very precisely calibrated and aligned. This is particularly so, to ensure that the system is as sensitive as possible to respond to changes in the movement of the fibre unit within the blowing head. It has however been found that it is difficult to obtain a drive wheel arrangement wherein the distance or space between the rims of the respective drive wheels is optimal i.e. sufficient to engage with the exterior of the fibre unit so that it can be pushed along in use without slipping, but without losing any of the sensitivity permitting the drive wheels to detect an impending buckle.

The optimal wheel rim distance is difficult to ascertain in the first place, and difficult to calibrate given the small dimensions involved. The wheel rim distance is also likely to change over time with use, requiring frequent and precise re-alignment. The resulting arrangement thus obtained is then optimal or suitable for use with only one, or a very limited range of fibre unit diameter sizes.

In GB 2388966 a blowing head is described in which a spring-loaded fine adjustment screw is used to obtain adjustment of the pre-set spacing between a pair of driving rollers. According to a first aspect of the invention there is provided a blowing head as set out in claim 1.

The blowing head according to the invention addresses various problems. These include the need to correctly and precisely calculate then calibrate the space or distance between the drive wheels optimally to provide sufficient grip to prevent fibre damage through slipping, while yet remaining light and sensitive to changes in fibre movement indicative of impending fibre buckle; the likelihood of change in the set distance between the drive wheels through use; lack of robustness of optical fibre installation apparatus for use in outdoor conditions; and lack of flexibility of use in current blowing heads with fibre units or fibre cables of various external diameter sizes.

The applicants in this case have realised that instead of considering the distance or space required to accommodate the external diameter of the fibre unit for which the blowing head is intended to be used, the above issues and problems could be addressed by considering instead the amount of pressure or force the drive wheels bear or compress onto each other while the fibre unit is driven between them.

With the claimed arrangement, there is no longer the need to calculate the optimal distance to put between the two drive wheels as was needed in the prior art - which was previously understood to be so that the drive wheels would just touch, or just not touch, each other. There is also no need to set this distance during manufacture, nor the need to re-set the same after use of the blowing head, both problematic tasks given the smallness of the dimensions involved.

Yet another advantage of the invention is that the invention will flexibly accommodate irregular or eccentric drive wheel circumferences or rim surfaces. In use, any irregularity of the circumferences of the respective wheels may during wheel rotation cause the distance between the wheel rims to vary as they rotate, so that the gap or distance between the drive wheels varies over time. The process of installation of the fibre unit may then be adversely affected so that the fibre unit slips between the drive wheels at some times (where the space between the wheels is excessive), and other times the sensitivity of the blowing head is impaired (where the drive wheels engage each other too tightly).

The blowing head of the invention can also be used with a wider range of fibre units or cables than could the blowing head of the prior art, with its fixed and rigid set drive wheel distance. Currently in the UK, fibre cables can include a range of numbers of fibre unit, from two to 12 fibres. It is possible that this range may in the future increase to 18 or 19 fibres. The blowing head of the invention will be more able to accommodate a larger range of fibre external diameters.

In a second aspect of the invention there is provided an installation including a blowing head of the invention, the installation further including an optical fibre unit, and a tube through which the optical fibre unit is to be installed.

In a third aspect of the invention there is provided a method of installing an optical fibre unit into a tube using the blowing head of the invention as set out in claim 5.

The invention will now be described, by way of example only, with reference to the following drawings in which:
Figure 1A is a block diagram of the parts of a typical blowing head according to the prior art,
Figure 1B depicts a blowing head according to the prior art,
Figures 2A and 2B depicts two views of a blowing head of the invention; and
Figure 3 is a further view of the interior of the blowing head of the invention.

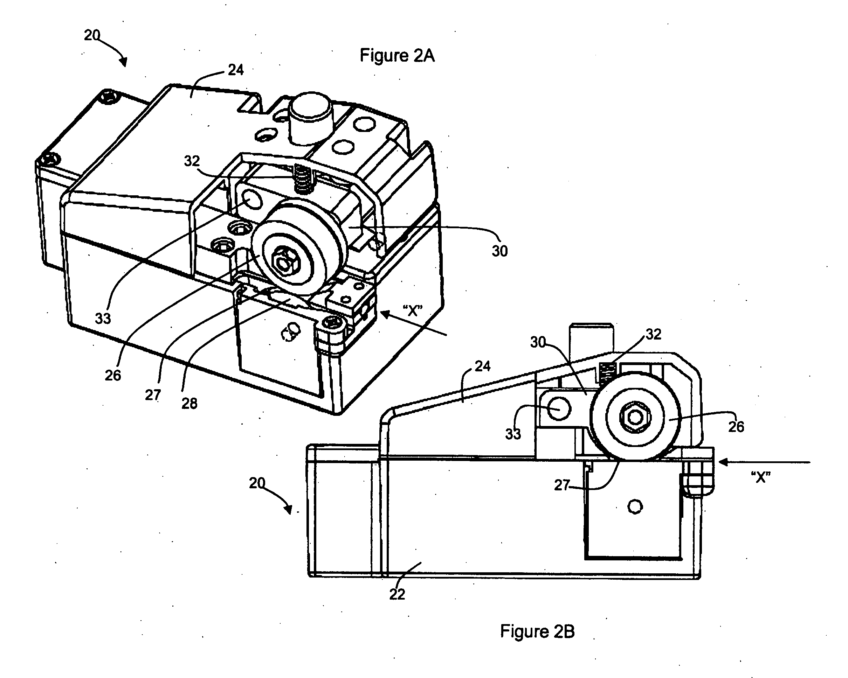

Figures 2A and 2B depict views of a blowing head (20) according to the invention. Figure 2A shows an exterior perspective view with a portion of the housing cut away for a view of the interior, in particular the drive wheels. Figure 2B is a side view of the blowing head of Figure 2A.

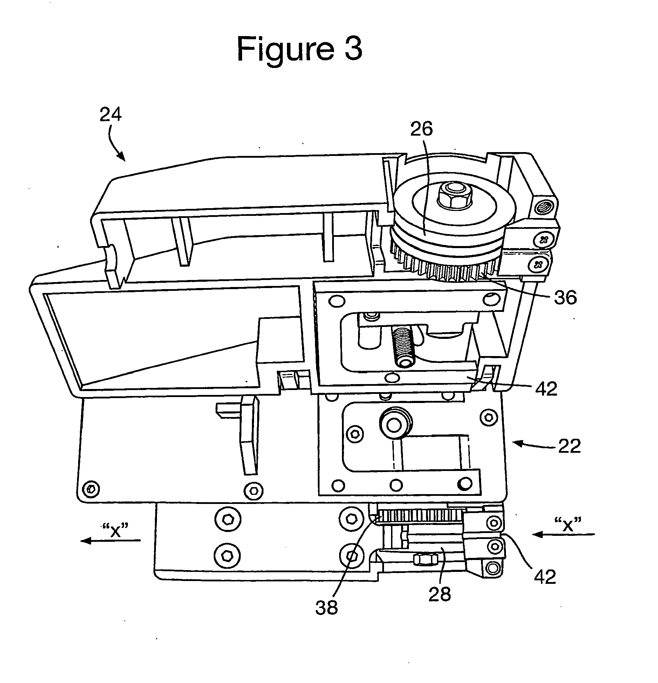

The blowing head of the invention is a development of the low-inertia blowing head of WO 2006103419. It comprises a housing (22, 24) which like the blowing head discussed against Figure 1B, can be opened to allow a user to access the interior, as shown, below in Figure 3. A bore (not clearly visible) extends the length of the blowing head, from an entry end to the exit end, along which path the fibre unit (not shown) travels during use. A section of the fibre unit path passes between the drive wheels. Upper and lower drive wheels (26, 28) for transmitting power from a motor (not shown) to drive the fibre unit along the bore and beyond the head are provided. (It would be appreciated that the terms "upper" and "lower" in this description are only used for convenience to refer to the two drive wheels disposed relative to each other so that any other arrangement e.g. side-by-side would be included in the references thereto.)

In use, the fibre unit is fed into the bore of the blowing head via the entry end in the direction of arrow "X".

In the blowing head of the invention, the upper drive wheel (26) is coupled to a biasing mechanism (30) which, activated by a spring (32), resiliently and flexibly biases the wheel towards the other drive wheel (28). In this embodiment, the use of a compact radius arm permits the rotation of the biasing means about a pivot pin (33). Thus unlike blowing heads of the prior art, the upper drive wheel is not fixed in position relative to other drive wheel, and so is "suspended". The spring is located approximately at the midpoint between the pivot and the suspended drive wheel:

Thus when a fibre unit travels through the blowing head, the suspended drive wheel urges or bears the fibre unit against the other drive wheel. This permits the drive wheels to flexibly accommodate the fibre unit regardless of its external dimensions, as it passes through the section where the two drive wheels both bear on the driven fibre unit (27).

With the use of biasing driving wheels, the need to calculate the precise distance to put between the drive wheel rims is removed, as is the practical problem of setting the same during manufacture in what needs to be a robust device for field use. The probability of misalignment caused through use is also removed or at the least reduced. This arrangement of the invention also compensates for any irregularity in the outline of one or both drive wheel rims.

A further advantage of employing a suspended drive wheel of the invention is that a blowing head can be used with a wider variety of fibre unit and cable sizes than was previously possible. As discussed below, various ranges of fibre sizes can be accommodated with optimal results during use during an installation session, depending on the pressure or force to which the biasing arm is set.

The embodiment of the invention shown in Figures 2A and 2B shows the biasing mechanism to be based on spring-loading. Also, while the upper drive wheel is shown to be the suspended wheel including the biasing mechanism, the other drive wheel - or for that matter, both drive wheels - can incorporate biasing means to obtain the advantage of the invention.

Turning back to Figures 2A and 2B, the biased drive wheel (26) is shown to be arranged so that in use the fibre unit will be caused to bear against the lower motorised drive wheel (28). Thus the fibre unit can be caused to bear against a second drive wheel which is freely turning (i.e. not motorised to output a driving force). In the preferred embodiment however, the lower drive wheel provides additional driving power, and also improves the sensitivity of the low-inertia system by being a moveable element.

As briefly mentioned above, the suspended or biased drive wheel is capable of accommodating a variety of different sized fibre units or cables, which have a range which in part depends on the biasing or compressive force set in the particular case.

The spring compressive force or pressure for the biasing means can be set at a variety of values. A high spring force will result in a stiff, unyielding suspended drive wheel, which will enhance the driving capability of the wheel and discourage fibre unit slipping. Conversely, a low spring force causes the suspended drive wheel to be highly responsive to changes in fibre unit and cable size, as well as to any irregularities in the outline of the drive wheel circumferences. The compressive force level can be selected depending on the user's priorities and requirements. It can also be, as discussed below, adjusted as needed.

In an embodiment for installing a fibre unit cable having an external diameter dimension of 1 mm, the compressive force applied via the spring-loaded biasing arm can be set at about 6.7 N with a spring rate of about 30 g/mm. The helical spring (32) used for the biasing in this embodiment is preferably relatively "lightweight", e.g. manufactured from 0.53 mm gauge spring steel of about 20 mm length, so that a small adjustment can be made to the drive wheel compressive force by e.g. a small screw that directly contacts the spring. The compressive force of the biasing means can be set using a separate or detachable spring balance, and adjusting the screw to compensate for any variations in the drive wheel compressive force, and thus to accommodate a different sized fibre cable or unit. Based on the most-commonly used blown fibre unit sizes of 1 mm and 1.5 mm however, the spring force rate differential between them is sufficiently insignificant so as not to require any adjustment of the biasing spring, nor in the level of capped motor current. There could however, be situations when the extent of change would require an adjustment of the spring force setting and/or the capped current levels.

The skilled person would appreciate that a helical spring is both compact and easily adjustable.

Figure 3 depicts yet another view of an embodiment of a blowing head (20) of the invention. Here, the two sections of the housing (22, 24) are open to show the interior. The upper drive wheel (26) is shown to be coupled to an upper gear wheel (36). When the two housing sections are closed together and secured by a screw (42), the teeth of the upper gear wheel engage with those of a lower gear wheel (38) which is coupled to the lower drive wheel (28). In the embodiment of the invention shown, a motor (not visible) is coupled to the lower drive wheel (28) so that in use, the driving force of the motor drives the two drive wheels (26 and 28) indirectly via the respective gear wheels (36 and 38). The particular arrangement of the gearing contributes to increasing the sensitivity and responsiveness of the system to fibre unit movement during use. Again, the biasing mechanism (30) is shown to be coupled to the upper wheel. This is because there is room in this area as the lower wheel is coupled to the motor.

Also depicted in this drawing are some other essential elements of the blowing head, including an air chamber portion (40) which includes a bore extending along its length. In use, an optical fibre enters the blowing head at the entrance end (42), proceeds along the bore, is driven along by and between the drive wheels and into the bore of the air chamber. The air chamber is so called as pressurised air is fed into its bore via a vent (14 in Figure 1 but not shown in Figure 3). The fibre unit eventually emerges from the other end of the air chamber and into a fibre tube (not shown).

## Claims

1. A blowing head (20) for installing an optical fibre unit into a tube, the blowing head comprising an upper and a lower drive wheel (26, 28) operatively connected to an electric motor for driving the optical fibre unit through the blowing head, wherein the blowing head is arranged to cap the electric current drawn by the electric motor such that the blowing head comprises a capped current system which is capable of responding to an impending buckle by the drive wheels stowing or stopping, the blowing head being **characterised in that** the upper drive wheel is resiliently biased toward the lower drive wheel at a predetermined compressive force by means of an adjustable spring-loaded biasing arm rotatable about a pivot pin (33) and biased by a helical spring (32) located approximately at the midpoint between the pivot pin and the upper drive wheel, the compressive force applied via the biasing arm being set at a value, with the spring having a spring rate, such that the spring rate force differential of the biasing arm when used with a 1 mm diameter optical fibre unit compared to when it is used with a 1.5 mm diameter optical fibre unit is sufficiently insignificant so as not to require any adjustment of the biasing spring.

2. A blowing head according to claim 1 wherein the lower drive wheel is in use coupled to the electric motor to rotatably drive the optical fibre unit into the tube via the blowing head.

3. A blowing head according to any preceding claim further including means to direct a source of pressurised air into the tube via the blowing head.

4. An installation including a blowing head (20) of any preceding claim, the installation further including the optical fibre unit and the tube through which the optical fibre unit is to be installed.

5. A method of installing an optical fibre unit into a tube using the blowing head of any one of claims 1 to 3, including the steps of
- predetermining a compressive force to resiliently bias the upper drive wheel (26) toward the lower drive wheel (28),
- inserting the optical fibre unit into the blowing head (20),
- driving the optical fibre unit through the blowing head using the drive wheels, and
- driving the optical fibre unit out of the blowing head and into a tube connected to the blowing head.

## Patentansprüche

1. Blaskopf (20) zum Installieren einer Faseroptikeinheit in eine Röhre, wobei der Blaskopf ein oberes und ein unteres Antriebsrad (26, 28) umfasst, die funktionsfähig mit einem Elektromotor zum Antreiben der Faseroptikeinheit durch den Blaskopf verbunden sind, wobei der Blaskopf dazu angeordnet ist, den vom Elektromotor angesaugten elektrischen Strom zu begrenzen, so dass der Blaskopf ein begrenztes Stromsystem umfasst, das imstande ist, auf ein bevorstehendes Ausknicken durch die langsamer werdenden oder stoppenden Antriebsräder zu reagieren, wobei der Blaskopf **dadurch gekennzeichnet ist, dass** das obere Antriebsrad in Richtung des unteren Antriebsrads mit einer vorgegebenen Komprimierungskraft mittels eines verstellbaren federbelasteten Vorbelastungsarms elastisch vorbelastet ist, der um einen Schwenkstift (33) drehbar und durch eine Schraubenfeder (32) vorbelastet ist, die sich ungefähr am Mittelpunkt zwischen dem Schwenkstift und dem oberen Antriebsrad befindet, wobei die über den Vorbelastungsarm ausgeübte Komprimierungskraft auf einen Wert eingestellt ist, wobei die Feder eine Federkonstante aufweist, so dass das Federkonstanten-Kraftdifferenziäl des Vorbelastungsarms, wenn es mit einer Faseroptikeinheit von 1 mm Durchmesser verwendet wird, im Vergleich zu dem Fall, wenn es mit einer Faseroptikeinheit von 1,5 mm Durchmesser verwendet wird, ausreichend unbedeutend ist, um keine Einstellung der Vorbelastungsfeder zu erfordern.

2. Blaskopf nach Anspruch 1, wobei das untere Antriebsrad im Gebrauch mit dem Elektromotor gekoppelt ist, um die Faseroptikeinheit über den Blaskopf drehbar in die Röhre zu treiben.

3. Blaskopf nach irgendeinem vorhergehenden Anspruch, ferner mit einer Einrichtung zum Leiten einer Quelle komprimierter Luft über den Blaskopf in die Röhre.

4. Installation mit einem Blaskopf (20) nach irgendeinem vorhergehenden Anspruch, wobei die Installation ferner die Faseroptikeinheit und die Röhre einschließt, durch welche die Faseroptikeinheit installiert werden soll.

5. Verfahren zum Installieren einer Faseroptikeinheit in eine Röhre unter Verwendung des Blaskopfs nach irgendeinem der Ansprüche 1 bis 3 mit den folgenden Schritten:
- Vorherbestimmen einer Komprimierungskraft, um das obere Antriebsrad (26) in Richtung des unteren Antriebsrads (28) elastisch vorzubelasten,
- Einfügen der Faseroptikeinheit in den Blaskopf (20),
- Antreiben der Faseroptikeinheit durch den Blaskopf unter Verwendung der Antriebsräder, und
- Antreiben der Faseroptikeinheit aus dem Blaskopf heraus und in eine mit dem Blaskopf verbundene Röhre.

## Revendications

1. Tête de soufflage (20) destinée à installer une unité à fibre optique dans un tube, ladite tête de soufflage comprenant des roues d'entraînement (26, 28) reliées à un moteur électrique afin d'entraîner ladite unité à fibre optique dans ladite tête de soufflage, ladite tête de soufflage étant prévue pour limiter le courant électrique absorbé par ledit moteur électrique, si bien que ladite tête de soufflage comprend un système à courant limité qui est capable de réagir à un fléchissement imminent moyennant un ralentissement ou un arrêt desdites roues d'entraînement, ladite tête de soufflage étant **caractérisée en ce que** la roue d'entraînement supérieure est sollicitée de manière flexible vers la roue d'entraînement inférieure à une force de compression prédéterminée à l'aide d'un bras de sollicitation réglable à ressort capable de tourner autour d'un pivot (32) et sollicité par un ressort hélicoïdal (32) situé quasiment à mi-chemin entre ledit pivot et ladite roue d'entraînement supérieure, la force de compression appliquée via ledit bras de sollicitation étant réglée sur une valeur précise, ledit ressort ayant une certaine flexibilité, afin que le différentiel de flexibilité du ressort dudit bras de sollicitation, lorsqu'il est utilisé avec une unité à fibre optique de 1 mm de diamètre (en comparaison avec une unité à fibre optique de 1 à 5 mm de diamètre), soit suffisamment insignifiant pour ne pas nécessiter de réglage dudit ressort de sollicitation.

2. Tête de soufflage selon la revendication 1, dans laquelle ladite roue d'entraînement inférieure, lors de son utilisation, est reliée audit moteur électrique afin d'entraîner par rotation ladite unité à fibre optique dans ledit tube, via ladite tête de soufflage.

3. Tête de soufflage selon l'une quelconque des revendications précédentes, qui comprend en outre un moyen destiné à orienter une source d'air sous pression vers le tube, via ladite tête de soufflage.

4. Installation qui comprend une tête de soufflage (20) selon l'une quelconque des revendications précédentes, ladite installation comprenant en outre ladite unité à fibre optique et ledit tube dans lequel ladite unité à fibre optique doit être installée.

5. Procédé d'installation d'une unité à fibre optique dans un tube à l'aide de la tête de soufflage selon l'une quelconque des revendications 1 à 3, qui comprend les étapes consistant à
- prédéterminer une force de compression destinée à solliciter de manière flexible la roue d'entraînement supérieure (26) vers la roue d'entraînement inférieure (28),
- insérer ladite unité à fibre optique dans ladite tête de soufflage (20),
- entraîner ladite unité à fibre optique dans ladite tête de soufflage à l'aide des roues d'entraînement, et
- entraîner ladite unité à fibre optique en-dehors de ladite tête de soufflage et dans un tube relié à ladite tête de soufflage.
